(19) **Europäisches Patentamt**

**European Patent Office**

**Office européen des brevets**

(11) **EP 1 338 955 A2**

(12) **EUROPEAN PATENT APPLICATION**

(43) Date of publication:
27.08.2003 Bulletin 2003/35

(51) Int Cl.⁷: **G06F 7/72**, G06F 11/10

(21) Application number: 02027597.0

(22) Date of filing: 10.12.2002

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **22.02.2002 JP 2002045574**

(71) Applicant: **Hitachi Ltd.
Tokyo (JP)**

(72) Inventors:
• **Watanabe, Takashi, Hitachi, Ltd., Int.Prop.Group
Chiyoda-ku, Tokyo 100-8220 (JP)**
• **Endo, Takashi, Hitachi, Ltd., Int.Prop.Group
Chiyoda-ku, Tokyo 100-8220 (JP)**
• **Kaminaga, Masahiro, Hitachi, Ltd.,
Int.Prop.Group
Chiyoda-ku, Tokyo 100-8220 (JP)**

(74) Representative: **Beetz & Partner Patentanwälte
Steinsdorfstrasse 10
80538 München (DE)**

(54) **Method for detecting errors in cryptographic calculations**

(57)    In an information processing method, an ordinary adder is structurally added with an embedding unit (804, 805) for embedding an error detection code (803) in input data A, B, an error detection code checking unit (807, 808), and an error detection code removing unit (809). Firstly, error detection data D is generated (803) and A and B are multiplied by the D (804, 805). Next, operation of AD + BD = (A+B)*D = CD is made by using an adder. In the error detection checking unit (807, 808), remainders modulo D are calculated (807) in respect of an operation result (C') and it is confirmed that the result is zero (808). If CD mod D ≠ 0, an error signal is delivered (811). The original operation result (C) can be obtained as CD*1/D = C.

$FIG. 8$

**Description**

BACKGROUND OF THE INVENTION

The present invention relates to an information processing method and more particularly, to fault detectable information processing apparatus and information processing method which can detect errors or fault tolerant information processing method and apparatus which can recover automatically from erroneous operations.

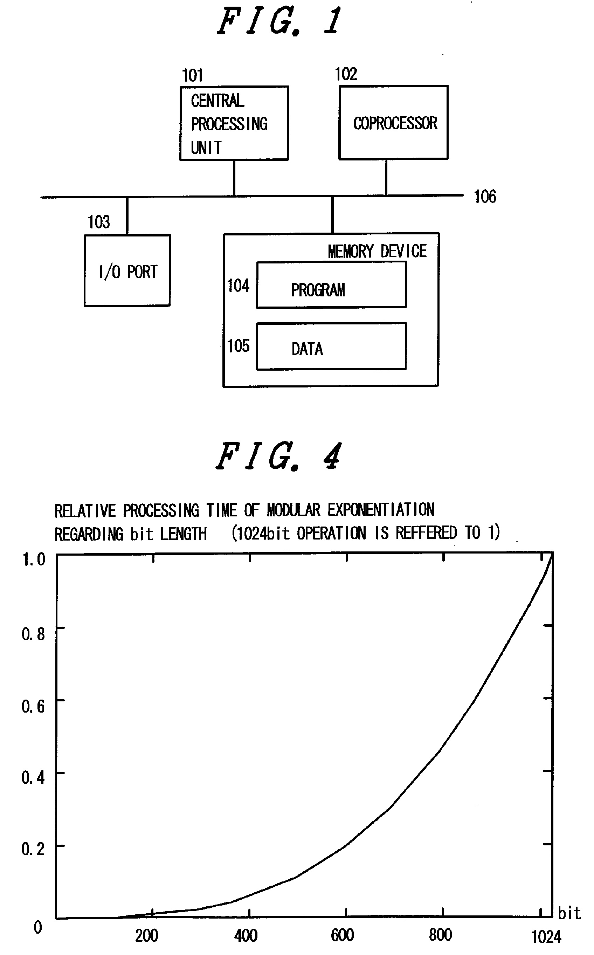

In recent years, information technology has been advanced in various kinds of apparatus and so, storage utilization of various kinds of information and information exchange between information processing apparatus have been carried out frequently. Concomitantly therewith, a situation has been increasing in which data handled externally in an exchange between apparatus, such as electronic money, billing information and personal information, are required to be processed while their secret being kept. Cryptography is indispensable for processing the information as above secretly. Fig. 1 shows the construction of a general information processing apparatus. A central processing unit 101 processes data stored in a data storage 105 in accordance with a program 104 stored in a memory device. Depending on the kind of operation, a coprocessor 102 is used to permit high-speed operations. The information processing apparatus can carry out data transmission/reception to/from the outside through an input/output port 103. Communication between information processing apparatus is performed through the input/output port.

At present, as principal cryptosystems, DES (Data Encryption Standard (National Bureau of Standards, Data Encryption Standard, U.S. Department of Commerce, FIPS pub.46, January 1977) and RSA (named after Rivest, Shamir, and Adleman) (R.L. Rivest, A. Shimir and L.M. Adleman, A method for obtaining digital signatures and public-key cryptosystems, Communications of the ACM(2)21 (1978), 120-126) are used. The DES is a secret key cryptosystem and the RSA is a public key cryptosystem. The secret key cryptosystem uses the same key for encryption and decryption and therefore it is also called a common key cryptosystem or a symmetrical key cryptosystem. The public key cryptosystem uses different keys for encryption and decryption and therefore it is also called an asymmetrical cryptosystem. Generally, in many structural forms, secret key encryption is conducted by mixing input data of about 64 bits to 128 bits with key bits also having about 64 bits to 128 bits to carry out plural times substitution of correspondence relation between bits and permutation of bit positions. The secret key cryptosystem permits calculation to be performed with only bit operation and reference to a small- scale table and therefore, even a small-scale information processing apparatus can finish the process in several milliseconds.

In the public key encryption, a mathematical relation is set up between the encryption key and the decryption key and as a result, usable keys are restricted. Accordingly, the key length is liable to be long, amounting up to 1024 bits. In addition, a large amount of arithmetic operations is carried out and therefore, a small-scale information processing apparatus needs several hundreds of milliseconds even when using a coprocessor. In the secret key encryption, the key needs to be shared by a transmitter and a receiver in advance but the processing can be proceeded with at a high speed. In the public key encryption, even when data is encrypted by using the encryption key laid open to public, the data can be decrypted with only the decryption key kept secretly. Presumption of the secret key from the publicized key faces calculative difficulties. In the public key encryption, there is no need of causing the key to be shared by the transmitter and receiver in advance, thus ensuring safe transmission/reception of data but more time is required for calculation than in the secret key encryption. For these reasons, it is frequent to use the secret key encryption for encrypting data used personally by the information processing apparatus and to use the public key encryption for encrypting data exchanged between the information processing apparatus not sharing the key in advance.

In the secret key cryptosystem, the secret key is shared between the data transmitter and receiver and secret data is transmitted/received by using the shared key. It is known that complete secret of the transmission/reception data can be realized by using a key of the same data amount as the amount of data to be transmitted/received but in general, the data amount of the key is set to be smaller than the amount of secrete data. One of reasons for this is that sharing of the key of the same data amount as the data amount to be transmitted/received is difficult to achieve. By making the data amount of key smaller than the data amount to be transmitted/received, a load imposed on sharing the key data can be decreased and highly efficient data transmission/reception can be ensured. The procedures for encrypting data to be transmitted/received by using the key are laid open to public in general in many cases. Accordingly, secretness of data to be transmitted/received depends on that of the key. Good encryption is one in which the key cannot be specified by a smaller amount of calculation than that of checking of all of the possible keys.

Cryptanalysis can be sorted into two kinds, that is, principle analysis and practical analysis. In the principle analysis, vulnerability of the design of encryption method is utilized. Generally, it is assumed that the analyzer knows some cryptograms encrypted by the same key. This is because it is clear that the analyzer can know output data from a cipher device if being permitted to monitor network cables connected with a computer during transmission/reception of data. An analysis method, in which a certain cryptogram is decoded with all keys and a key successful in obtaining meaningful data is considered to be a correct answer key, is called Brute Force. A meaningful principle analysis method is one that can specify the correct answer key at a higher speed than that in the Brute Force. For example, as a principle analysis method of DES representing the standards of secret key encryption, a differential analysis and a linear analysis have been known. By using these analytic methods, a correct answer key can be specified with $2^{47}$ selected input texts and about $2^{37}$ check operations in comparison with $2^{55}$ check operations in average in the Brute Force. However, this cannot still be an analysis method practicable with the memory capacity and calculation speed in the present-day computer.

As systems principally usable as the cryptology at present, there are the DES representing the secret key encryption and the RSA representing the public key encryption as described previously. Specifically, the RSA has a public key and a secret key and data encrypted with any one of the keys is decodable with only the other key. In addition, it is difficult to specify the other key from the one key because of necessity of a drastically large amount of calculation. Because of the above characteristics, when data is encrypted with the public key and then transmitted, the data can be known by only the receiver, so that secret data can be shared by both the transmitter and the receiver. Since the public key encryption proceeds in general at a slower operation speed than that in the case of the secret key encryption, this encryption is unsuitable for encryption of a large amount of data. Then, it is general to perform transmission/reception of a large amount of data by using secret data shared through the use of the public key encryption as a key to common key encryption. Similarly to the DES, any method of performing the principle analysis with a practical apparatus has not yet been known in respect of the RSA.

As one practical analysis, an analytic method utilizing error operation or fault operation (Hereinafter, abbreviate as "error" or "fault".) has been known. In a method reported by Dan Boneh, Richard A. Demillo, and Richard J. Lipton, in "On the Importance of Checking Cryptographic Protocols for Faults", Lecture Notes in Computer Science, Advances in Cryptology, proceedings of EUROCRYPT '97, pp.37-51, 1997), the result of an error operation caused during a RSA operation based on the Chinese Remainder Theorem (CRT) is compared with the normal result so as to perform analysis. According to Boneh et al, analysis can be accomplished in the presence of one normal result and one error result. In case the RSA is practically implemented in the information processing apparatus, it is not easy to zero or nullify the possibility that an error takes place. Conceivably, there are various kinds of causes of errors, including design miss of the information processing apparatus, stability of the information processing apparatus in the practical use environment and external intentional, erroneous operation inducement.

As a most simplified method of coping with errors, re-operation can be considered. In case results of two or more re-operations do not coincide with each other, an error is determined. In taking care of errors, a re-operation may further be conducted, an error process may be undertaken or the apparatus may be reset. The re-operation faces a problem that time consumed till end of operation is twice that in the case where the re-operation is not carried out. When an operation needing 500ms is conducted twice, the time amounts up to 1000ms, with the result that the processing speed of the system utilizing encryption is decreased considerably. Further, in the event that the same error is caused during the re-operation, the erroneous operation cannot be detected. There is also available a method in which the encrypted result is decoded and an error is decided by non-coincidence of the decoded result with input data. Since the encryption operation and the decryption operation differ from each other, occurrence of an error that can pass the error operation decision is considered to be very difficult. The operating time is doubled as in the case of the previous re-operation. But, in the RSA, the number of bits of the public key can be so constructed as to be smaller than that of the secret key and accordingly, an operation from encryption to decryption can be carried out at a higher speed than that in the re-encryption. It can be said that a situation where the present invention is very effective is exist in at least the RSA. The public key is, however, can not always be small in general cases. When the secret key and public key are identical in bit length, doubled operation time is needed like the re-operation which needs the operation time twice that when the re-operation is not conducted.

SUMMARY OF THE INVENTION

An object of the invention is to provide apparatus and method for detecting errors at a high speed.

As one practical analysis for the RSA, an analytic method utilizing errors has been known. The method reported by Boneh et al in 1997 is a method in which a result of an error caused during a RSA operation utilizing the CRT is compared with a normal result to perform the analysis. According to the CRT, when

$$x_p = x \bmod p$$

$$x_q = x \bmod q$$

are known, x mod N can be calculated as

$$S = x_p * q * (q^{-1} \bmod p) + x_q * p * (p^{-1} \bmod q)$$

Also, it is known that S can be reduced to

$$S = (x_p - x_q) * (q^{-1} \bmod p) \bmod p * q + x_q$$

In an practical information processing apparatus, for the sake of determining S, the operation is decomposed into

$$C = x_p - x_q \tag{1}$$

$$u = q^{-1} \bmod p \tag{2}$$

$$D = C * u \bmod p \tag{3}$$

$$E = D * q \tag{4}$$

$$S = E + x_q \tag{5}$$

,which are processed sequentially.

It is now assumed that an error takes place in operation (1) during operation of C and as a result, C' is obtained. The result C' causes an error to be included also in D in operation (3). This is indicated by D'. Because the D changes to D' containing the error, E also changes to E' containing an error in operation (4). As a result, S' containing an error is obtained in operation (5). Here, the difference between the normal operation result S and S' is calculated as below:

$$S_{diff} = S - S' = (D * q + x_q) = (D' * q + x_q)$$

$$= (D - D') * q$$

In the above expression, D-D' has prime factors at a probability which is not small. Accordingly, by factorizing $S_{diff}$, q representing a large prime number can be obtained with ease. Alternatively, by calculating a greatest common divisor between N(=pq) representing a public key of the RSA and $S_{diff}$ through Euclidean algorithm, a greatest common divisor q can be obtained at a high speed. After the q has been obtained, N is divided by q to obtain the other prime factor p. With the p and q known, a secret exponent d can be obtained from the publicized exponent e. This is because when an Euler function is expressed by phi(), the relation of ed≡1 mod phi(N) stands and hence, with the p and q known, phi(N)=(p-1)(q-1) can be calculated.

In this manner, according to the method of Boneh et al, decoding can be performed at a high probability so long as one normal operation result and one error operation result are available. With the RSA mounted practically in the information processing apparatus, it will be clear that the possibility that an error takes place is not zero. Various kinds of causes of errors can be considered, including design miss of the information processing apparatus, stability of the information processing apparatus in practical use environment and external intentional, erroneous operation inducement.

In the prior art, detection of errors has been tried by carrying out re-operation or by comparing a decoding result of an encrypted result with input data. But, the operation speed is approximately doubled ultimately and the load increases in practical use. Accordingly, the present invention intends to provide apparatus and method for detecting errors at a high speed.

An instance where an operation f is conducted in respect of an original operation value will be considered. In the present invention, to solve the problem, the original operation value is mapped through mapping g to add the original operation value with redundant information, the operation f is carried out in the mapping destination to obtain an operation result in the mapping destination, the present or absence of an error is checked by confirming that the redundant information is conserved before and after the operation f, and the operation result in the mapping destination is mapped to the original operation result by using inverse mapping $g^{-1}$ of the mapping g. Further, as mapping h, one for mapping the original operation value to an operation environment, which mapping is the same type as the original operation system and has a small amount of calculation, is used, operation of the original operation value is conducted in the original system and then, only verification is carried out in the destination of mapping h to perform error detection of small calculation amount.

Even when an operation based on the same operation value is carried out twice or more and results are compared with each other, an error due to a reproducible erroneous operation cannot be detected. For example, in an instance where 1 is added as an error without fail when 5 + 7 is operated, even when operation is repeated plural times and operation results are compared with each other, an error operation result 13 is obtained every operation and the error cannot be detected. Then, the original operation value is mapped through mapping g to add redundant information to the original operation value. As the redundant information, one is selected which is conserved before and after the operation f in the mapping destination so that the presence or absence of an error can be confirmed by checking the redundant information after the operation. If the mapping g is implemented by multiplying the operation value by 5, then 5*5 + 7*5 = 12*5 will stand and the value 5 is conserved before and after the operation. As the original operation result, a value 12 can be obtained through the inverse mapping $g^{-1}$, that is, division by 5. When considering the previously presumed error operation, the operation is 5*5+7*5+1=12*5+1, with the result that the value 5 is not conserved before and after the operation to permit the occurrence of the error to be detected. In case 5 is herein added as the error without fail, the operation result amounts to multiples of 5 and the error cannot sometimes be detected. To cope with this inconvenience, the redundant information is not defined by a fixed value but is rendered to be changeable in respect of individual operations in order that even when an error takes place owing to a reproducible erroneous operation, the error can be detected at a high probability. Further, by mapping the operation result based on the original operation value to an operation system of a smaller calculation amount through mapping h and performing verification in the mapping destination, the verification can be carried out at a higher speed than that in the original operation system. A method is available which partly remove information of the original operation value by carrying out mapping to an operation system of a small calculation amount. For example, upper bits exceeding a certain bit of an operation value is excluded from an operation. In such a case, the error detection probability decreases but if the probability is sufficiently high, the function of verification can fulfil itself. In the above, by randomly selecting the redundant information to be added or selecting the mapping h at random, values in the operation can be modified to values unpredictable by the analyzer to make difficult the analysis such as observation of operating current during operation.

The redundant information is added to the operation value and conservation of the redundant information before and after the operation is checked. To this end, values conservable before and after the operation are used for the redundant information to be added. If the redundant information is conserved correctly before and after the operation, the operation is so determined as to be carried out correctly but if the redundant information is destroyed, the operation is so determined as to be mistaken on the way. The presence or absence of the information conserved before and after the operation depends on the kind of operation. An example will be given by assuming a practical information processing apparatus.

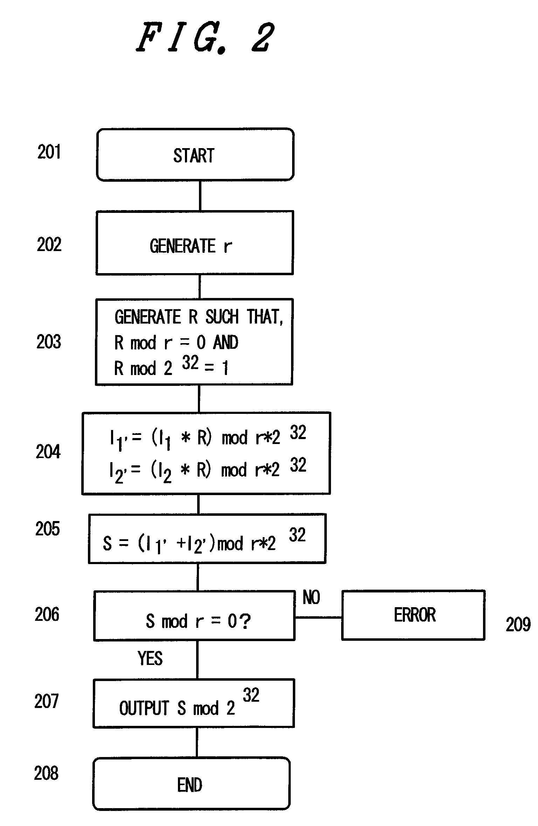

Let an information processing apparatus having an operation device of 32 bits be considered. In the operation device of 32 bits, a remainder operation with mod $2^{32}$ proceeds. Namely, bits in excess of 32-th bit from the least significant bit of an operation value are neglected. Calculation of numerical values exceeding 32 bits is carried out while performing complement by using a carrier flag to propagate carry or shortage of number of digits. Essentially, addition or multiplication is an operation of two inputs and one output. An example of addition is shown in Fig. 2. In the present invention, as shown in Fig. 2, a value R is generated (203) which is 1 with mod $2^{32}$ and 0 with mod r in respect of a certain value r generated in (202), the R is multiplied (204) by inputs $I_1$ and $I_2$ before they are inputted to an adder and the multiplication results are added together on mod $r*2^{32}$ (205). By calculating mod r in the operation result, it is confirmed that the operation result is surely zeroed (206). Unless the operation result is 0, indicating that the operation is erroneous, an error process is carried out suitably (209). In case the operation is determined not to be erroneous, mod $2^{32}$ in the operation result is calculated and delivered as an original operation result (207). Here, the R corresponds to redundant information. The R can be used randomly so long as it satisfies the conditions described previously. Concretely, R satisfying the aforementioned properties in respect of the inputs $I_1$ and $I_2$ is used to calculate addition as follows.

$$\text{result} = I_1*R + I_2*R \bmod r*2^{32} = (I_1+I_2)*R \bmod r*2^{32}$$

stands and for error detection,

$$result \bmod r = 0$$

is confirmed. Next, result mod $2^{32}$ is calculated to provide

$$result \bmod 2^{32} = ((I_1+I_2)\bmod 2^{32} * R \bmod 2^{32})\bmod 2^{32}$$

Since the R is herein so constructed as to meet R mod $2^{32}$ = 1, an original operation result is delivered as

$$output = result \bmod 2^{32} = (I_1+I_2)\bmod 2^{32}$$

In the event that the addition causes the error operation, the probability that either $I_1$*R or $I_2$*R does not amount to multiples of r becomes high. In other words, the result of mod r does not amount to 0 and an error can be detected. This is possible because the R is conserved before and after the addition.

This stands goods for subtraction. When inputs 1 and 2 are represented by $I_1$ and $I_2$ and, respectively, and R is used,

$$result = I_1*R - I_2*R \bmod r*2^{32}$$
$$= (I_1 - I_2)*R \bmod r*2^{32}$$

stands and for error detection,

$$result \bmod r = 0$$

is confirmed. Next, result mod $2^{32}$ is calculated to provide

$$result \bmod 2^{32} = ((I_1+I_2)\bmod 2^{32} * R \bmod 2^{32})\bmod 2^{32}$$

Here, since R mod $2^{32}$ = 1 stands, and original operation result is delivered as

$$output = result \bmod 2^{32} = (I_1-I_2)\bmod 2^{32}$$

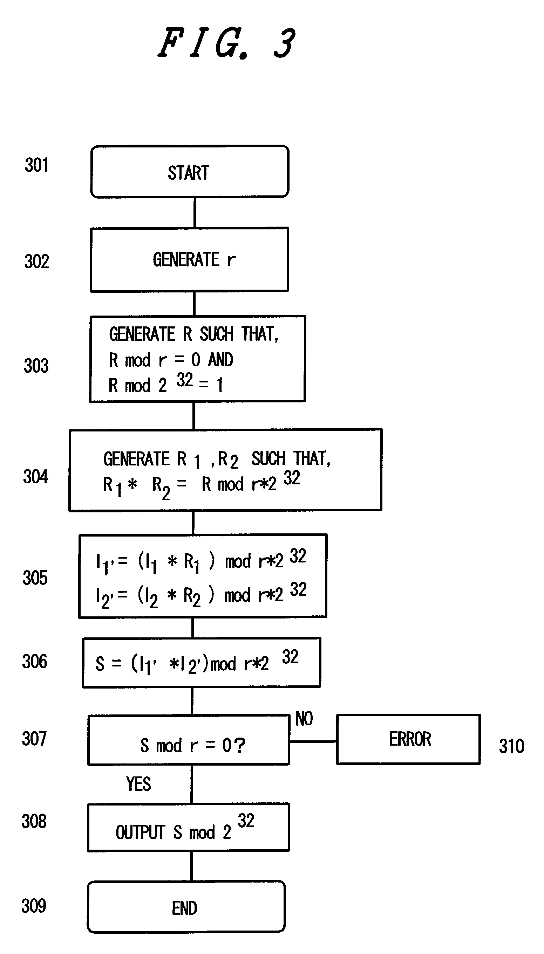

Multiplication will be described with reference to Fig. 3. In multiplication, r and R are generated (302, 303) as in the precedence and R is decomposed into two $R_1$ and $R_2$ (304), by which inputs $I_1$ and $I_2$ are multiplied to perform operations (305, 306). The decomposition of R is to obtain $R_1$ and $R_2$ satisfying $R_1*R_2$=R mod r*$2^{32}$. Obviously, $R_1$ and $R_2$ may first be obtained and thereafter, R satisfying R=$R_1R_2$ mod r*$2^{32}$ may be obtained.

Like the precedence, R is so constructed as to meet R mod $2^{32}$=1. Multiplication is given by

$$result = I_1*R_1 * I_2*R_2 \bmod r*2^{32}$$
$$= (I_1 * I_2)*(R_1 * R_2)\bmod r*2^{32}$$
$$= (I_1 * I_2)*R \bmod r*2^{32}$$

and for error detection,

$$\text{result mod } r = 0$$

is confirmed (307). Next,

$$\text{result mod } 2^{32} = ((I_1 * I_2) \text{mod } 2^{32} * R \text{ mod } 2^{32}) \text{mod } 2^{32}$$

is set. Since the R is herein so constructed as to meet $R \text{ mod } 2^{32} = 1$, an original operation result is delivered (308) as

$$\text{output} = \text{result mod } 2^{32} = (I_1 * I_2) \text{mod } 2^{32}$$

The multiplication differs from addition/subtraction in that the R is required to be decomposed into $R_1$ and $R_2$. If both the $I_1$ and $I_2$ are multiplied by R, an error occurring in either one of them cannot be detected with mod r. This is because when the error causes the operation result of $I_1 * R$ to assume r' which is not multiples of r, multiplication of r' by $I_2 * R$ results in an operation result which is again multiples of r. An example will be described where an error takes place in only either a or b. It is now assumed that for a and b having each 32 bits, a*b is operated. An i-th bit of b is indicated by $b[i](0 \leq i \leq 31)$. Generally,

$$a*b = a*b[31]*2^{31} + a*b[30]*2^{30} + ... + *a*b[0]*2^{0}$$

is set and addition is carried out sequentially. If one or more in a series of additions are not processed, this means that an error takes place in only one of the input values, that is, b. If the value "a" copied from a register external of the operation device to a register internal of the operation device changes, this means that an error takes place in only the "a" even when the addition process proceeds normally. Here, the operation modulo $2^{32}$ has been described on the presumption of the operation device of a general computer. But, in the case of an operation device of 64 bits, for instance, an operation modulo $2^{64}$ can substitute and generally, this stands good for an operation modulo N.

In the foregoing, examples of error detection in addition, subtraction and multiplication which are basic units of operation have been described. In a practical situation, an error detection process can be done at any time if an operation is a combination of these basic units. As an example, an instance where modular exponentiation is carried out will be considered. The modular exponentiation is an operation for determining $y^x \text{ mod } N$ in respect of input y, exponent x and modulus N. This can be expressed by $(y*y*...y*) \text{ mod } N$ and can be considered as x remainder multiplications. Then, R meeting $R \text{ mod } N = 1$ is decomposed into x $R_0....R_{x-1}$, which are sequentially multiplied by y to obtain

$$\text{result} = ((y*R_0)*(y*R_1)*... *(y*R_{x-1})) \text{ mod } rN =$$

$$= (y^x * R) \text{ mod } rN$$

By confirming result mod r = 0, an error can be detected and the original operation result $y^x \text{ mod } N$ can be obtained as "result mod N". Similarly, multiplication of a and b modulo N, that is, (a*b) mod N is decomposed into (a+a+....+a) mod N and b remainder additions of a and in respect of R,

$$\text{result} = ((a*R)+(a*R)+ ... +(a*R)) \text{ mod } rN =$$

$$(a*b*R) \text{ mod } rN$$

is obtained. If result mod r = 0 stands good, no occurrence of error can be considered and the original operation result can be obtained as result mod N. In this manner, by performing only one error detection process based on mod r after a plurality of additions, subtractions and multiplications have been carried out, the processing speed can be increased.

In the above, it is to be noted that in the operation for multiplying the input value a by the random number R, too, an error needs to be detected. With c=a*R, if c mod r≠0 or c mod a≠0 stands, indicating that an error takes place, such a process as an error process or re-calculation can be carried out in respect of the error.

Let an instance where the modular exponentiation $y^x \text{ mod } N$ is operated be considered again.

In the above method, the R is decomposed into x $R_0 ...R_{x-1}$ and then, y is multiplied by these components.

But if such a method is used when only the small-scale calculation capability is allowed for use such as in the case of a smart card, the operation speed is decreased to extremity and practical use cannot be envisaged. A more efficient method needs to be used.

As a method for operating the $y^x$ mod N at a high speed, a method utilizing the addition chain has been known. When an i-th bit of x is expressed by x[i] and the number of bits of x is n,

$$x = x[n-1]*2^{n-1} + x[n-2]*2^{n-2} + ... + x[0]*2^0$$

can be written. This can be rewritten by

$$y^x \bmod N =$$

$$y^{\{x[n-1]*2^{\wedge}\{n-1\} + x[n-2]*2^{\wedge}\{n-2\} + ... + x\{[0]*2^{\wedge}0\}} \bmod N$$

(symbol ^ represents power). This operation can be executed pursuant to the following algorithm.

```
Input: y, x, n
Output: C = y^x mod N
C:=1
for i=n-1 down to 0
C:=(C*C) mod N
if x[i]=1 then C:=(C*y) mod N
Next i
return C
```

If $y*R_i$ are calculated successively in a "for loop" of the present algorithm and multiplied by C for the sake of applying the above method, this gives rise to a decrease in processing speed. Then, the present invention takes advantage of the fact that $a^{\{phi(N)+1\}}$ mod N = a mod N stands good in respect of Euler function phi(). For x'=(1-x) mod phi(N), C' = $y^{x'}$ mod N is operated and (C*C') mod N is set.

$$(C*C') \bmod N = y^{\{x+x'\}} \bmod N = y^{\{1 \bmod phi(N)\}} \bmod N = y \bmod N$$

stands.

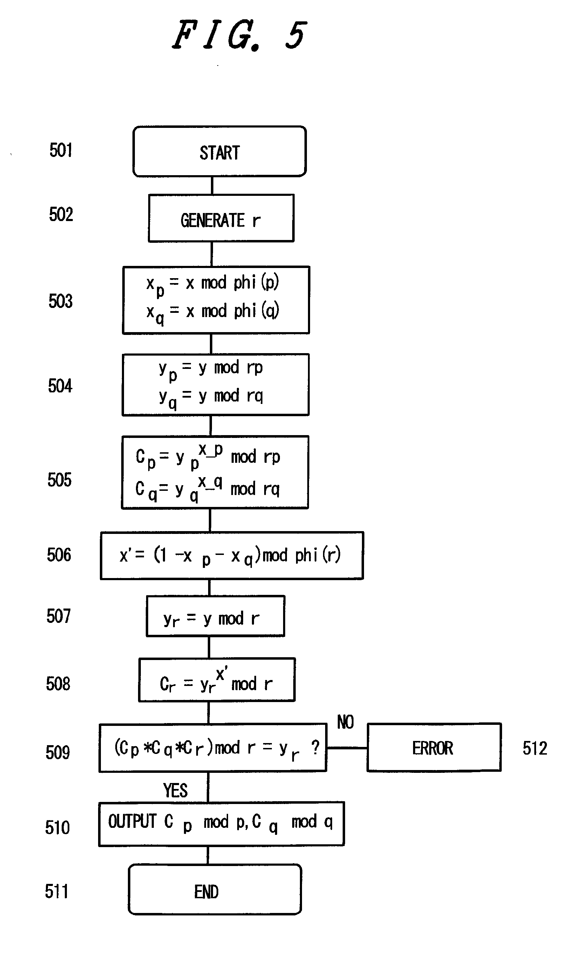

Accordingly, if (C*C') mod N does not coincide with the input value y, occurrence of an error can be determined. Incidentally, in general cases, the number of bits of x' substantially equals that of x and therefore, if the operation is carried out with C' unaltered, then the processing time will approximately be doubled. Thus, in the present invention, the modular exponentiation is operated with mod rN instead of operating with mod N and an error detection process is carried out under mod r. In other words, for x' = (1-x) mod phi(r), C'= $y^{x'}$ mod r is operated and an error is detected by checking the coincidence between (C*C') mod r and y mod r. By performing the operation under mod r, the number of bits of x' can be suppressed to below the bit number of r. This is because $y^{x'}$ mod r = (y mod r)$^{\{x' \bmod phi(r)\}}$ mod r stands and the number of bits of phi(r) can be less than that of r. For example, with a value of 32 bits used for r, y mod r and x' have each the number of bits being less than 32, so that as compared to the operation performed for y and x' of 1024 bits, the operation speed can be increased vastly. Fig. 4 is a graph showing the processing speed during operation of each bit when the processing speed for 1024 bit operation is set to 1. This demonstrates that during an operation at 800 bits, an operation at a speed twice the speed at 1024 bits can be ensured and during an operation at 32 bits, an operation can be carried out at a speed which is about 30000 times the speed at 1024 bits.

In the present invention, an error is checked by comparing (C*C') mod r with y mod r and hence, when the operation result is multiples of y mod r, even a result of erroneous operation cannot be detected as an error. But, the probability that such an event occurs is $1/2^{32}$ when for example, r is of 32 bits and is almost negligible. As necessary, r of more larger bit number may be used with the aim of promoting the detection probability. In case errors do not occur at a probability of 100%, r of smaller bit number may be used for performing operations at higher speed. For example, in case the error occurrence probability is 12.5%, when r of 29 bits is used, the error occurrence probability is 100% and the detection capability which is apparently identical to that in the case of 32 bits can be provided and the operation speed can be increased by about 1.3 times that in the case of 32 bits.

The modular exponentiation can be operated at a high speed by using the CRT. For example, when N=pq stands for two prime numbers p and q which are mutually prime, the input is y, the exponent is x and the modulus is N, $y^x$ mod N can be operated as follows:

$$C_p = y^x \bmod p = (y \bmod p)^{\{x \bmod phi(p)\}} \bmod p \qquad \text{(A)}$$

$$C_q = y^x \bmod q = (y \bmod q)^{\{x \bmod phi(q)\}} \bmod q \qquad \text{(B)}$$

$$\text{result} = (((C_p - C_q)^*(q^{-1} \bmod p)) \bmod p)^*q + C_q \qquad \text{(C)}$$

Since, in the general RSA, each of the p and q has the number of bits that are substantially half the bit number of N, operations of $C_p$ and $C_q$ are carried out at a high speed which is about 8 times faster than that in the case where $y^x$ mod N is operated directly. Namely, even when the recombination of operation (C) is taken into consideration, the whole of modular exponentiation based on the CRT can be completed at about 3 to 4 times faster speeds. In the device such as the smart card that is restricted in calculation capability, operation using the CRT is desirable. For the operation based on the CRT, however, a strong secret key obtaining method utilizing errors exists as indicated by Boneh et al and therefore, measures to prevent erroneous operation results from being delivered must be taken. For this reason, errors are detected with the construction as below.

The error detection method of the present invention is applied to operations (A) and (B) of the CRT. For a certain number r (502),

$$C_{pr} = y^x \bmod rp = (y \bmod rp)^{\{x \bmod phi(rp)\}} \bmod rp \qquad \text{(503), (504), (505)}$$

$$C_{qr} = y^x \bmod rq = (y \bmod rq)^{\{x \bmod phi(rq)\}} \bmod rq \qquad \text{(503), (504), (505)}$$

$$x' = (1-(x \bmod phi(rp))-(x \bmod phi(rq))) \bmod phi(r) \qquad \text{(506),}$$

$$C = y^{x'} \bmod r = (y \bmod r)^{x'} \bmod r \qquad \text{(507), (508)}$$

$$C_{pr} {}^* C_{qr} {}^* C = (y \bmod r)^{\{(x \bmod phi(rp))+(x \bmod phi(rq))+x' \bmod phi(r)\}} \bmod r$$

$$= (y \bmod r)^{\{1 \bmod phi(r)\}} \bmod r$$

$$= y \bmod r \qquad \dots (509)$$

are set and when the operation result coincides with y mod r (507), the probability that the operation proceeds correctly is determined to be high (509).

True operation results of $C_p$ and $C_q$ can be obtained as $C_p$ mod p and $C_q$ mod q, respectively (510).

It is assumed herein that N=pq stands in respect of two prime numbers p and q which are mutually prime on the presumption of the RSA used at present. But in respect of three prime numbers p, q and s which are mutually prime,

$$C_{pr} = y^x \bmod rp = (y \bmod rp)^{\{x \bmod phi(rp)\}} \bmod rp$$

$$C_{qr} = y^x \bmod rq = (y \bmod rq)^{\{x \bmod phi(rq)\}} \bmod rq$$

$$C_{sr} = y^x \text{ mod } rs = (y \text{ mod } rs)^{\{x \text{ mod } phi(rs)\}} \text{ mod } rs$$

$$x' = (1-(x \text{ mod } phi(rp))-(x \text{ mod } phi(rq))-$$

$$(x \text{ mod } phi(rs))) \text{ mod } phi(r)$$

$$C = y^{x'} \text{ mod } r = (y \text{ mod } r)^{x'} \text{ mod } r$$

$$C_{pr}*C_{qr}*C_{sr}*C$$
$$= (y \text{ mod } r)^{\{(x \text{ mod } phi(rp))+(x \text{ mod } phi(rq))+(x \text{ mod } phi(rs))+x' \text{ mod } phi(r)\}} \text{ mod } r$$
$$= (y \text{ mod } r)^{\{1 \text{ mod } phi(r)\}} \text{ mod } r$$
$$= y \text{ mod } r$$

can also be set. In this manner, according to the method of the present invention, even with the number of prime numbers increased, the operation amount of C used for error detection remains unchanged.

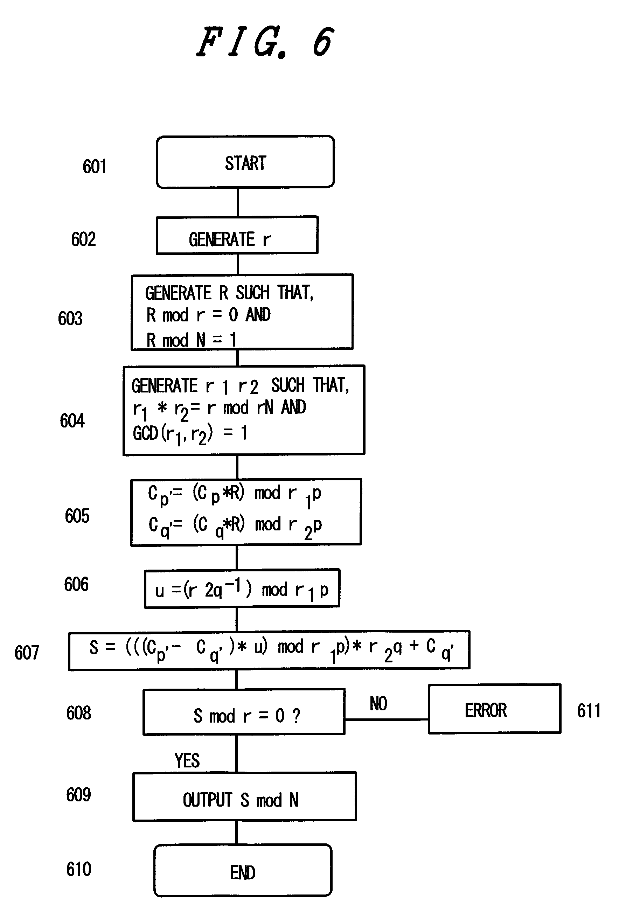

In the modular exponentiation to be based on the CRT, the error detection during operations of (A) and (B) can be allowed by the aforementioned method of the present invention. In the operation (C), too, because of the construction by addition, subtraction and multiplication, the detection of errors is possible. This will be explained with reference to Fig. 6. Firstly, a random number r is generated (602). A number R meeting R mod r = 0 and R mod N = 1 is prepared (603). The r is decomposed into $r_1$ and $r_2$ which are mutually prime (604).

$$C_p: = C_p*R \text{ mod } r_1p \qquad\qquad (605)$$

$$C_q: = C_q*R \text{ mod } r_2q \qquad\qquad (605)$$

$$S = (((C_p-C_q)*((r_2q)^{-1} \text{ mod } r_1p)) \text{ mod } r_1p) *r_2q + C_q \qquad\qquad (606), (607)$$

As a result, S can be obtained which meets $S=(R*y^x) \text{ mod } rN$. If S mod r ≠ 0 stands, it is indicated that an error takes place during the operation (608). A true operation result represented by $y^x \text{ mod } N$ can be obtained as S mod N. It is to be noted that even when $C_p$ and $C_q$ are exchanged with each other in the operation of S to provide

$$S = (((C_p-C_q)*((r_1p)^{-1} \text{ mod } r_2q)) \text{ mod } r_2q)*r_1p + C_p$$

,the same operation result $S=(R*y^x) \text{ mod } rN$ can be obtained.

Next, the error detection capability in the present system will be described. It is now assumed that an error takes place in $C_q$. On the assumption that the error gives rise to an erroneous component k and $C_q$ is changed to $C_q$: $=C_q-k$,

$$S = (((C_p-(C_q-k))*((r_2q)^{-1} \text{ mod } r_1p)) \text{ mod } r_1p)*r_2q+C_q-k$$
$$= ((((C_p-C_q)*((r_2q)^{-1} \text{ mod } r_1p))+k*(r_2q^{-1} \text{ mod } r_1p)) \text{ mod }$$
$$r_1p)*r_2q+C_q-k$$

stands.
Since

$$S \bmod r_1 = (C_p - C_q) \bmod r_1 + k + C_q \bmod r_1 - k$$

$$= C_p \bmod r_1$$

$$= 0 \ (\because C_p \bmod (r_1 * r_2) = 0)$$

and

$$S = (((C_q - k - C_p) * ((r_1 p)^{-1} \bmod r_2 q)) \bmod r_2 q) * r_1 p + C_p$$

$$= (((C_q - C_p) * ((r_1 p)^{-1} \bmod r_2 q) - k * (r_1 p)^{-1} \bmod r_2 q)) \bmod$$

$$r_2 q) * r_1 p + C_p$$

stand, there result

$$S \bmod r_2 = (C_q - C_p) \bmod r_2 - k + C_p \bmod r_2$$

$$= C_q \bmod r_2 - k$$

$$= -k (\because C_q \bmod (r_1 * r_2) = 0)$$

$$\neq 0$$

$$S \bmod r = ((S \bmod r_1 - S \bmod r_2) * (r_2^{-1} \bmod r_1) \bmod r_1) * r_2 + S \bmod r_2$$

#0

and errors can be detected under mod r. Further, when $r_1$ and $r_2$ are each assumed to be of 32 bits, S mod r becomes 0 when -k mod $r_2$ = 0 and this occurs only at a probability of $1/2^{32}$. Because of symmetry of $C_p$ and $C_q$, this holds true when an error takes place in $C_p$. A correct operation result can be obtained as S mod N (= $y^x$ mod N).

Like the precedence, N=pq is set herein by taking the presently used RSA into consideration but in case N=pqs is set, r is also decomposed into $r_1$, $r_2$ and $r_3$ which are mutually prime, so that operation based on the CRT can be carried out as follows:

$$C_p := (C_p * R) \bmod r_1 p$$

$$C_q := (C_q * R) \bmod r_2 q$$

$$C_s = (C_s * R) \bmod r_3 S$$

Of course, p and qs are mutually prime and on the basis of properties of the CRT, r can be decomposed into $r_1$ and $r_2$ to provide

$$C_p: = (C_p * R) \bmod r_1 p$$

$$C_{qs}: = (C_{qs} * R) \bmod r_2 qs$$

This can also be applied similarly to the case where four or more prime numbers are used.

In the present invention, multiplication by random numbers is performed to carry out various kinds of operations and consequently, data during operation differ operation by operation. Further, the operation data depend on neither the key to encryption nor the input data and therefore, decoding the secret key is difficult to achieve even when the operation time and consumption current depending on the operation data are analyzed.

A similar method can be applicable to all kinds of operations using addition, subtraction and multiplication and to cryptosystems.

Other objects, features and advantages of the invention will become apparent from the following description of the embodiments of the invention taken in conjunction with the accompanying drawings.

BRIEF DESCRIPTION OF THE DRAWINGS

Fig. 1 is a block diagram showing the fundamental construction of an information processing apparatus.
Fig. 2 is a flow chart of an error detection process in a 32-bit adder.
Fig. 3 is a flow chart of an error detection process in a 32-bit multiplier.
Fig. 4 is a graph showing execution time of a modular exponentiation operation of each bit when execution time of a modular exponentiation operation of 1024 bits is set to 1.
Fig. 5 is a flow chart of a process with fault detection in a modular exponentiation operation utilizing an addition chain.
Fig. 6 is a flow chart of a process with fault detection in an operation based on Chinese Remainder Theorem.
Fig. 7 is a block diagram showing a general adder having two inputs and one output.
Fig. 8 is a block diagram showing the construction of an adder with fault detection having two inputs and one output.
Fig. 9 is a block diagram of a general multiplier having two inputs and one output.
Fig. 10 is a block diagram showing the construction of a multiplier with fault (error) detection having two inputs and one output.
Fig. 11 is a block diagram showing the construction of an operation device with fault detection having n inputs and one output.
Fig. 12 is a block diagram showing an operation device with fault detection having n inputs and one output and constructed by using two inputs and one output with fault detection in multiple stages.
Fig. 13 is a block diagram showing a general exclusive or operation device having two inputs and one output.

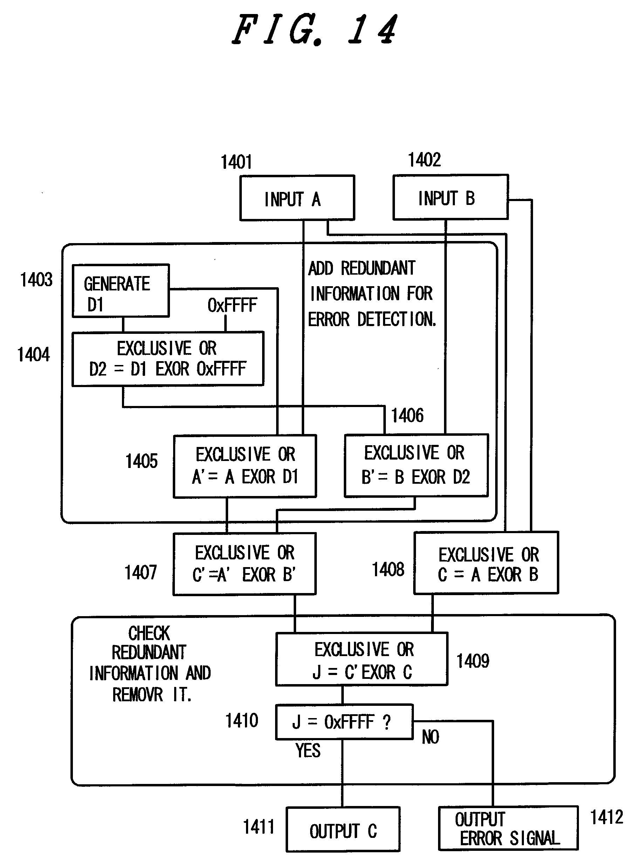

Fig. 14 is a block diagram showing an exclusive or operation device with fault detection having two inputs and one output.
Fig. 15 is a flow chart of a modular exponentiation operation process with fault detection using the CRT.
Fig. 16 is a flow chart of a modular exponentiation process with fault detection using the CRT and constructed so as to prevent operation data from being predicted from input values.

DESCRIPTION OF THE EMBODIMENTS

(1) Error Detection in Addition, Subtraction and Multiplication

An example of an adder with fault detection will be described.

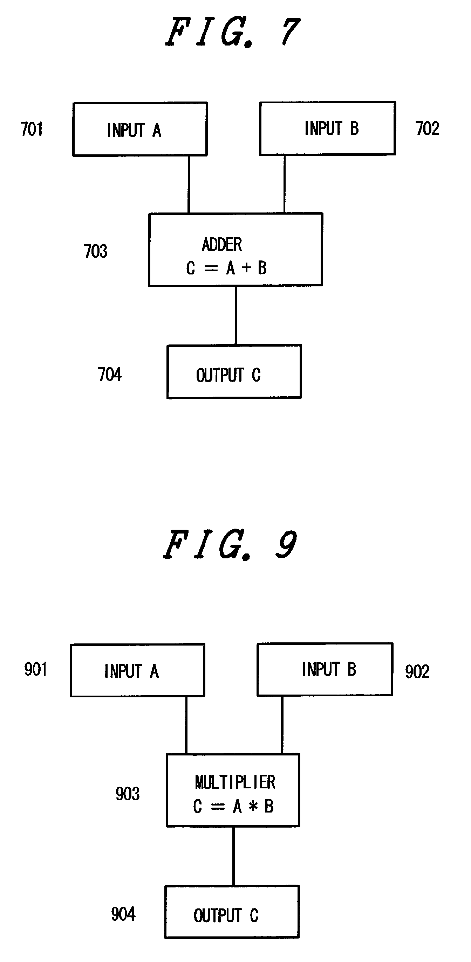

Referring to Fig. 7, there is illustrated in block form an example of a most simplified adder 703 which receives two input values A 701 and B 702 and delivers one output value C 704.

$$A + B = C$$

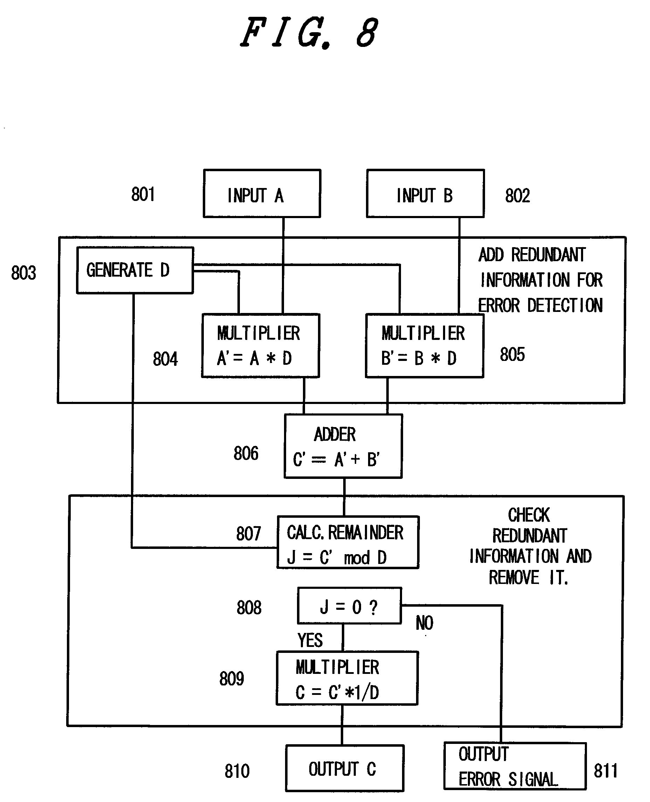

On the other hand, an adder of the present invention is illustrated in Fig. 8. In the present adder, an ordinary adder 806 is structurally added with mapping adapted to embed redundant information for error detection into input data, a redundant code check for error detection adapted to check operation results and inverse mapping adapted to remove the redundant code for error detection. Firstly, an arbitrary value D is generated as the redundant information for error detection (803) and input values A 801 and B 802 are multiplied by the value D (804 and 805).

Next, AD and BD are added together by using the ordinary adder 806.

$$AD + BD = (A+B)*D = CD$$

where normal operation results are multiples of D.

In the redundant information check for error detection, remainders represented by (operation results) modulo D are calculated (807) and congruity of the results with zero (0) is confirmed (808).

$$(CD) \bmod D = 0$$

This indicates properties which hold good when the operation results are multiples of D.

In case

$$(CD) \bmod D \neq 0$$

stands, an error signal is outputted (811).

The original operation results C can be obtained as

$$CD*1/D = C$$

by multiplying the aforementioned operation results by 1/D (809) to remove the redundant information for error detection (810).

In the practical procedure, it is preferable to confirm that operations of A*D and B*D are conducted without causing errors when the input values are multiplied by the error detection code. For example, in order to verify correctness of the operation A*D, (A*D) mod A = 0 and (A*D) mod D = 0 are confirmed. To satisfy the conditions as above, the operation results must be multiples of A*D. More specifically, in order for an error that has occurred to pass the present check, the operation result needs to be k*A*D for a certain integer k. In case each of the A and D is of 16 bits, the probability that such a result can be obtained in random error operations is $1/2^{32}$ and is negligibly small. On the assumption that the operation results are considered to be creditable if recalculation is performed without fail and both results of two successive operations are decided not to contain errors, the probability that operations containing errors can pass the present check is still $1/2^{64}$. If three of more recalculations are carried out, the probability that errors are included can be decreased further.

Errors in AD + BD can be checked using (CD) mod D = 0. On the assumption that D is of 16 bits, the probability that operations containing errors can pass the present check is $1/2^{16}$. The probability that operations containing errors can pass the present check can be decreased through the recalculation as described above.

For subtraction, a similar procedure can stand good when the above is read with substitution of -B for B.

(2) Multiplier with Fault Detection

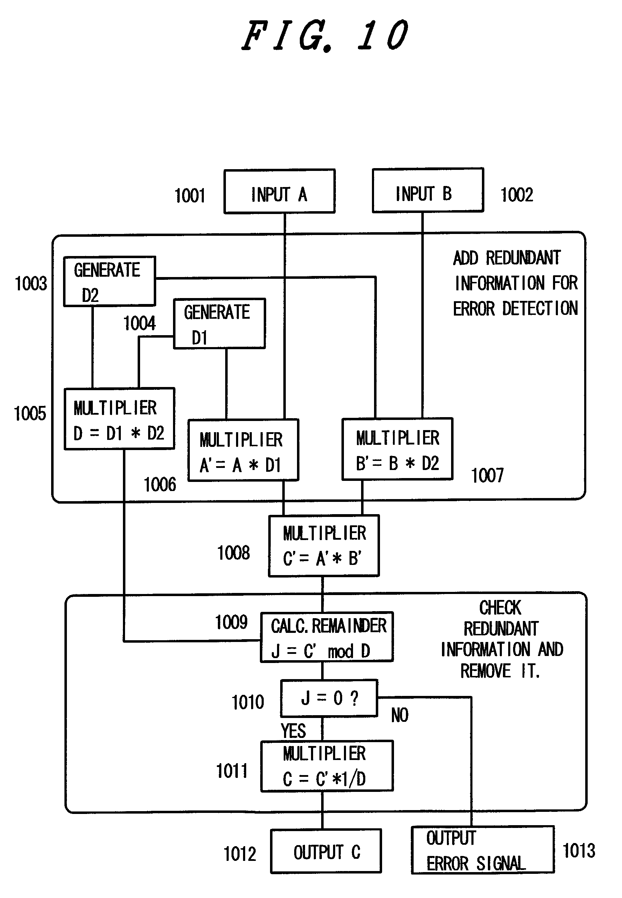

As shown in Fig. 9, a most simplified multiplier 903 receives two input values A 901 and B 902 and delivers one output value C 904.

$$A*B = C$$

On the other hand, a multiplier of the present invention is illustrated in Fig. 10. Firstly, arbitrary values D1 and D2 are generated as redundant information for error detection (1003 and 1004). Next, D1 and D2 are multiplied by each other to obtain D (1005). The value A is multiplied by D1 and the value B is multiplied by D2 (1006 and 1007). Results of the operations are further multiplied together by using a multiplier (1008).

$$A*D1*B*D2 = (A*B)*(D1*D2) = (A*B)*D = CD$$

Namely, normal operation results are multiples of D.

The multiplier calculates remainders modulo D in respect of the operation results (1009) and congruity of the results with 0 is confirmed (1010).

$$(CD) \bmod D = 0$$

This indicates properties attributable to the operation results congruent with multiples of D.

In case

$$(CD) \bmod D \neq 0$$

stands, an error signal is outputted (1013). The original operation results can be obtained (1012) as

$$CD*1/D = C$$

by multiplying the operation results by 1/D (1011).

Multiplication can be expressed in terms of addition.

When

$$A*B = C$$

is reduced to

$$A+A+ \ldots +A = C$$

which is B additions of A's, the number of bits of B is b and an i-th bit of B is expressed by B[i], the above multiplication can also be expressed as

$$A*B[b-1]*2^{b-1}+A*B[b-2]*2^{b-2}+ \ldots +A*B[0]*2^{0} = C$$

in terms of an addition of b values.

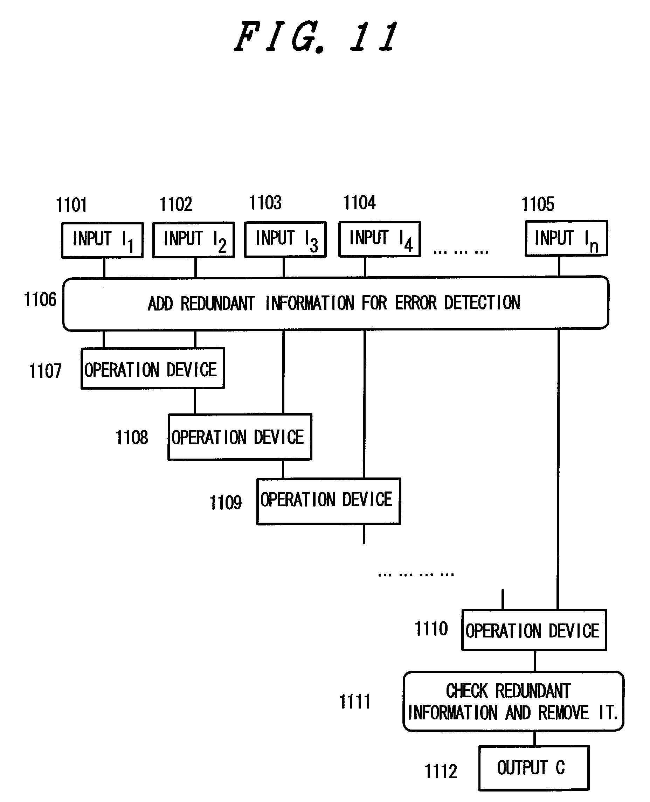

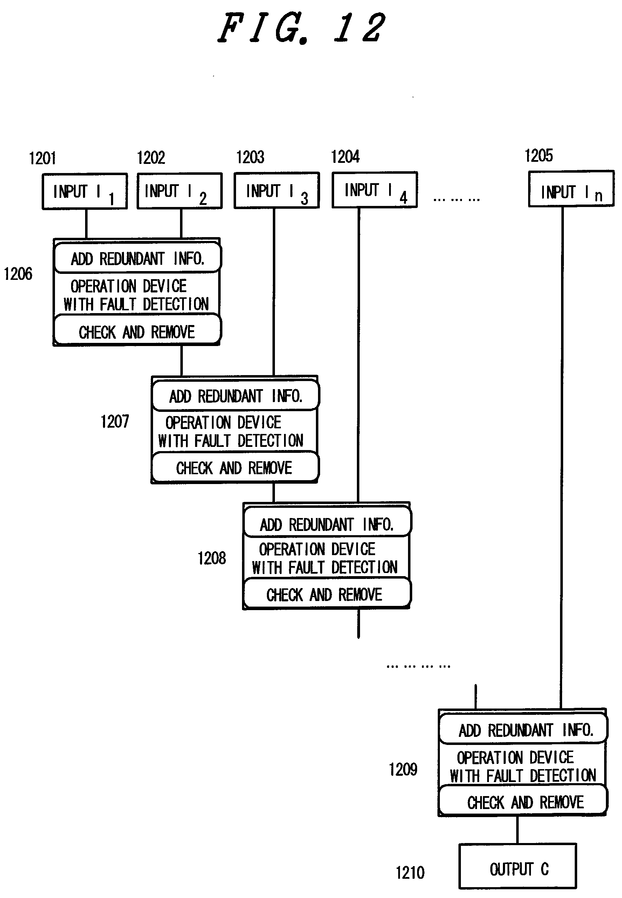

Therefore, the previously-described adders may be used as shown in Fig. 11 or 12 in place of the multiplier to carry out sequential calculations.

(3) Modular Exponentiation with Fault Detection

Power exponentiation $y^x$ can be decomposed into multiplication of x y's and hence an exponentiation operation device with fault detection can be constructed using the multipliers with fault detection described previously.

Further, since multiplication can be decomposed into additions as described previously, an exponentiation operation device with fault detection can also be constructed using the adders described previously.

The construction of an adder with fault detection having three inputs and one output will now be described.

Assumptively, the three inputs have values of A, B and C, respectively and the one output has a value of D.

$$A+B+C = D$$

The adder generates redundant information for error detection in the form of an arbitrary value E by which the three input values are multiplied.

Next, AE, BE and CE are added together.

$$AE+BE+CE = (A+B+C)*E = DE$$

The normal operation results are multiples of D.

The adder calculates remainders modulo E in respect of operation results and congruity of the results with 0 is confirmed.

$$(DE) \bmod E = 0$$

This indicates properties which stand when the operation results are multiples of E.

The original operation results can be obtained as

$$DE*1/E = D$$

by multiplying the operation results by 1/E.

An adder with fault detection having four or more inputs and one output can be constructed similarly.

Also, the construction of a multiplier with fault detection having three inputs and one output will be described below.

Assumptively, the three inputs have values of A, B and C, respectively, and the one input has a value of D.

$$A*B*C = D$$

The multiplier generates, as redundant information for error detection, an arbitrary value E. Next, the E is decomposed into data E1, data E2 and data E3 which provide E when they are multiplied together. Then, A is multiplied by E1, B is multiplied by E2 and C is multiplied by E3.

Subsequently, AE1, BE2 and CE3 are multiplied by each other.

$$AE1*BE2*CE3 = (A*B*C)*(E1*E2*E3) = DE$$

Normal operation results are multiples of E.

The multiplier calculates remainders modulo E in respects of operation results and congruity of the results with 0 is confirmed.

$$(DE) \bmod E = 0$$

This indicates properties which stand when the operation results are multiples of E.

The original operation results can be obtained as

$$DE*1/E = D$$

by multiplying the operation results by 1/E.

A multiplier with fault detection having four or more inputs and one output can also be constructed similarly.

When an operation device with fault detection having a plurality of inputs and one output is constructed in this manner, the number of error detection process can be suppressed to one in respect of an operation in a unit of plural input values. To construct the operation device with fault detection having plural inputs and one input as shown in Fig. 11, operation devices (adders and multipliers) without fault detection which are called plural times can be employed. Since the operation devices without fault detection are used, loads for error detection can be removed and as a result, the operation speed can be increased drastically as will be seen from Fig. 12 when compared to the case where operation devices with fault detection having two inputs and one output are called plural times.

A general computer carries out operations by using registers of about 32 bits. In other words, it performs operations modulo $2^{32}$.

In the addition of two inputs and one output described previously, that is,

$$A+B = C(\bmod 2^{32})$$

the redundant information D for error detection is used to obtain operation results S, which are given by

$$S = AD + BD = CD \ (\text{mod } D{*}2^{32})$$

$$S \bmod D = (CD \bmod D{*}2^{32}) \bmod D = (CD) \bmod D = 0$$

is confirmed and there results

$$(S{*}1/D) \bmod 2^{32} = C$$

In order for 1/D to exist in modulus $2^{32}$, it is necessary that D and $2^{32}$ be mutually prime. Accordingly, it is to be noted that an odd value be used as the D. This holds true in the case of multiplication.
Here, the value of modulus is exemplified as $2^{32}$ but in general case, operation can be done with modulus set to p. Taking the adder, for instance, in

$$A + B = C \ (\text{mod } p)$$

the input values A and B are multiplied by the data D for error detection to calculate the operation result S as

$$S = AD + BD = (CD) \bmod Dp$$

By setting

$$S \bmod D = (CD \bmod Dp) \bmod D = (CD) \bmod D = 0$$

, an error operation can be checked in respect of general value p of modulus.
The original operation result can be obtained by

$$(S{*}1/D) \bmod p$$

In order for 1/D to exist in mod p, the greatest common divisor GCD (D, p) = 1 must stand and therefore, the D satisfying the condition is prepared in advance.
For the purpose of obtaining the original operation result, it is also conceivable to use D meeting D mod p = 1 instead of multiplication by 1/D. As the D, $d{*}(d^{-1} \bmod p)$ can be used in respect of a certain number d. In this case, the number of bits of $d^{-1} \bmod p$ often substantially equals the number of bits of p, with the result that the value Dp of modulus during operation with fault (error) detection increased. For example, on the assumption that the bit number of D equals that of p, the time for operating AD + BD amounts to about twice the time for operating A + B. Then, $D = d{*}(d^{-1} \bmod p)$ is defined in respect of d having the bit number smaller than that of p to allow the operation with fault detection to be carried out under the value dp of modulus. An error check can be carried out by confirming that S mod d = 0 stands. The flow of the operation of A + B is as follows.

$$S = (AD+BD) \bmod dp$$

$$S \bmod d = ((A+B){*}D) \bmod d =$$

$$((A+B){*}d{*}(d^{-1} \bmod p)) \bmod d = 0$$

The original operation result can be obtained as

$$S \bmod p = ((A+B)*(d*(d^{-1} \bmod p) \bmod p)) \bmod p$$
$$= ((A+B)*(1 \bmod p)) \bmod p$$
$$= (A+B) \bmod p$$

Incidentally, in case the number of bits of this d is n, S mod d = 0 stands good even when errors are included in S at a probability of $1/2^n$ and therefore, it is to be noted that preferably, as large value of d as possible needs to be used.

(4) Exclusive Or Operation Device with Fault Detection

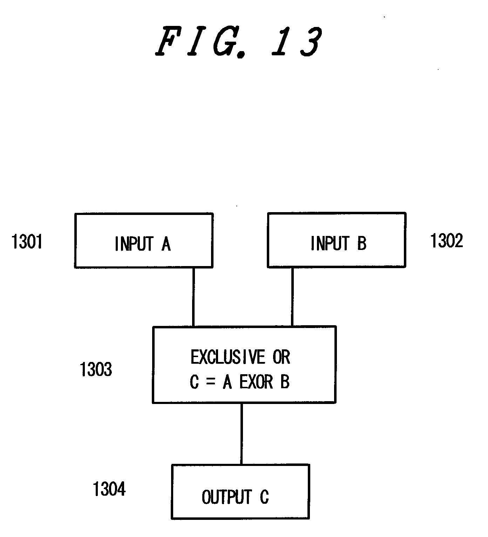

An error can be detected by comparing a result of ordinary operation for an input value with a result of operation using an input value embedded with an error detection code.
An instance will herein be described in which an operation of exclusive or (EXOR) of input values A and B is carried out. The exclusive or operation is an operation of two inputs and one output (Fig.13). An exclusive or operation device with fault detection generates a certain number D1 (1403) and determines a certain number D2 by EXORing D1 and OxFFFF (assumptively, the operation is carried out on the basis of 16 bits) by generating a number D1 (1403) (1404).
Next, an operation

$$C = A \text{ EXOR } B$$

is carried out (1408) in respect of the input values A and B and by using an exclusive or A' of the input value A and D1 and an exclusive or B' of the input value B and D2,

$$A' = A \text{ EXOR } D1 \qquad (1405)$$

$$B' = B \text{ EXOR } D2 \qquad (1406)$$

$$C' = A' \text{ EXOR } B' \qquad (1407)$$

are determined. Subsequently, since

$$C \text{ EXOR } C' = A \text{ EXOR } B \text{ EXOR } A' \text{ EXOR } B'$$
$$= A \text{ EXOR } B \text{ EXOR } A \text{ EXOR } D \text{ EXOR } B \text{ EXOR } D'$$
$$= D \text{ EXOR } D'$$
$$= \text{0xFFFF} \qquad \dots (1409)$$

stands, the original operation result C is delivered (1411) if the C EXOR C' is surely OxFFFF (1410). If C EXOR C'≠0xFFFF stands, indicating that an error takes place, an error process is carried out (1412).
For plurality of inputs $I_0, \dots, I_{n-1}$, R, too, is so constructed as to permit $D_0 \text{EXOR}_1 \text{EXOR}\dots, \text{EXOR} D_{n-1} = \text{0xFFF}$ to stand,

$$C = I_0 \text{ EXOR } I_1 \text{ EXOR } \dots \text{ EXOR } I_{n-1}$$

is calculated and in respect of

$$I_0' = I_0 \text{ EXOR } D_0$$

$$I_1' = I_1 \text{ EXOR } D_1$$

$$I_{n-1}' = I_{n-1} \text{ EXOR } D_{n-1}$$

$$C' = I_0' \text{ EXOR } I_1' \text{ EXOR } ... \text{ EXOR } I_{n-1}'$$

is obtained and an error can be detected by checking that

$$C \text{ EXOR } C' = 0xFFFF$$

stands. If no error is determined, the original operation result C is delivered.

(5) Now, an instance is considered where a modular exponentiation $y^x \bmod N$ for modular exponentiation error detection using an addition chain is operated.

As a method of operating $y^x \bmod N$ at a high speed, a method utilizing the addition chain has been known. When an i-th bit of x is represented by x[i] and the number of bits of x is n, it is possible to write

$$x = x[n-1]*2^{n-1} + x[n-2]*2^{n-1} + ... + x[0]*2^{0 \ x[0]*2^0\}} \bmod N .$$

This can be reduced to

$$y^x \bmod N = y^{\{x[n-1]*2^{n-1}+x[n-2]*2^{n-2}} + ... + {}^{x[0]*2^0}\}} \bmod N .$$

This operation can be executed pursuant to the following algorithm.

```
Input: y, x, N
Output: C = y^x mod N
C: = 1
      for i=n-1 down to 0
      C: = (C*C) mod N
      if x[i] = 1 then C: = (C*y) mod N
      Next i
         return C
```

According the present algorithm, the operation can be finished in an order of the bit length of exponent x and so can be carried out at a high speed. The present invention takes advantage of the fact that $a^{\{phi(N)+1\}} \bmod N = a \bmod N$ stands good in respect of an Euler function phi(). As $x' = (1-x) \bmod phi(N)$, $C' = y^{x'} \bmod N$ is operated and $(C*C') \bmod N$ is set, where

$$(C*C') \bmod N = y^{\{x+x'\}} \bmod N = y^{\{1 \bmod phi(N)\}} \bmod N = y$$

$$\bmod N.$$

Accordingly, if $(C*C') \bmod N$ does not coincide with the input value, occurrence of an error can be determined.

In general case, the bit number of x' substantially equals that of x and therefore, by carrying out operation of C' as it is, the processing time is substantially doubled.

In the present invention, the modular exponentiation is operated with mod rN instead of mod N and an error detection process is performed under mod r. Namely, $x' = (1-x) \bmod phi(r)$ is set and $C' = y^{x'} \bmod r$ is operated so that coincidence between $(C*C') \bmod r$ and $y \bmod r$ may be checked to detect an error. By performing the operation with mod r, the bit number of x' can be suppressed to below that of r. This is because

$$y^{x'} \bmod r = (y \bmod r)^{\{x' \bmod phi(r)\}} \bmod r$$

stands and the bit number of phi(r) can be less than that of r. For example, when r of 32 bits is used, y and x' can be of less than 32 bits and as compared to the case where operations are conducted in respect of y and x' of 1024 bits, the operation speed can be increased drastically. The error is checked by comparing (C*C') mod r with y mod r and therefore, when the operation result is multiples of y mod r, even the erroneous result cannot be detected as an error. But, the probability that such an event will occur is almost negligible, for example, amounting to $1/2^{32}$ in the case of r of 32 bits. The fault detection for modular exponentiation utilizing the addition chain can be implemented with Fig. 5.

(6) Modular Exponentiation Error Detection Utilizing CRT

The modular exponentiation can be operated at a high speed by using the Chinese Remainder Theorem (CRT). For example, on the assumption that N=pq stands in respect of two prime numbers p and q which are mutually prime and the input, exponent and modulus are represented by y, x and N, respectively, $y^x$ mod N can be operated on the basis of the following equations:

$$C_p = y^x \bmod p = (y \bmod p)^{\{x \bmod phi(p)\}} \bmod p$$

$$C_q = y^x \bmod q = (y \bmod q)^{\{x \bmod phi(q)\}} \bmod q$$

$$result = (((C_p - C_q)*(q^{-1} \bmod p)) \bmod p)*q + C_q$$

In general RSA, each of the p and q has the number of bits being substantially half that of N and hence, as compared to the case where $y^x$ mod N is directly operated, $C_p$ and $C_q$ can be operated at about 8-times higher speeds. Namely, even when the recombination of (C) is taken into consideration, the whole of the modular exponentiation operation pursuant to the CRT can be completed at 3 to 4 times higher speeds. In the case of a smart card having the limited calculation capability, operation using the CRT is desirable. But, since a strong decoding method utilizing errors is effective to the operation based on the CRT as indicated by Boneh et al, measures to prevent delivery of error results to the outside are needed.

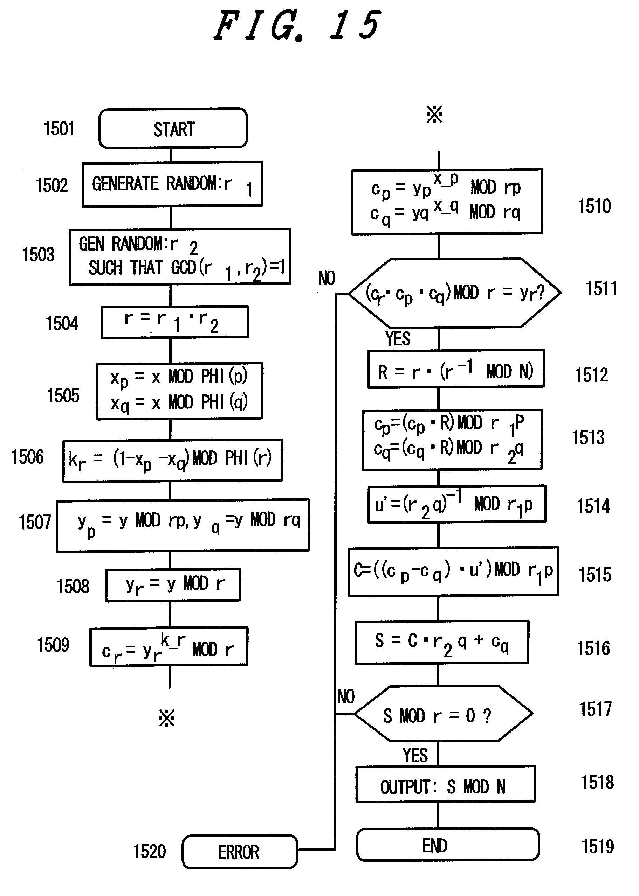

A process flow with fault detection is shown in Fig. 15. By using the error detection method of the present invention,

$$C_{pr} = y^x \bmod rp = (y \bmod rp)^{\{x \bmod phi(p)\}} \bmod rp \qquad (1510)$$

$$C_{qr} = y^x \bmod rq = (y \bmod rq)^{\{x \bmod phi(q)\}} \bmod rq \qquad (1510)$$

$$kr = (1-(x \bmod phi(p))-(x \bmod phi(q))) \bmod phi(r) \qquad (1506)$$

$$C = y^{kr} \bmod r = (y \bmod r)^{kr} \bmod r \qquad (1509)$$

$$C_{pr}*C_{qr}*C = (y \bmod r)^{\{(x \bmod phi(rp))+(x \bmod phi(rq))+kr \bmod phi(r)\}} \bmod r$$

$$= (y \bmod r)^{\{1 \bmod phi(r)\}} \bmod r$$

$$= y \bmod r \qquad \dots (1511)$$

are set defined in respect of a certain number r as shown in Fig. 15. If the operation results coincide with y mod r, the probability that the operation is carried out correctly is high.

The original operation results of $C_p$ and $C_q$ can be obtained as $C_p$ mod p and $C_q$ mod q, respectively, but for the sake of continuing the operation without removal of the error detection code, the operation continues without performing the operations of $C_p$ mod p and $C_q$ mod q. Subsequently, the method shown in Fig. 6 is utilized to determine R mod r = 0 and a number R satisfying R mod N = 1 is prepared. As the R as above,

$$R = r*(r^{-1} \text{ mod } N) \qquad (1512)$$

is used herein. In applying the CRT, modulo in the two operations need to be mutually prime and hence r is decomposed into $r_1$ and $r_2$ which are mutually prime to define

$$C_p := (C_p*R) \text{ mod } r_1p \qquad (1513)$$

$$C_q := (C_q*R) \text{ mod } r_2q \qquad (1513)$$

The operation result is

$$S = (((C_p-C_q)*((r_2q)^{-1} \text{ mod } r_1p)) \text{ mod } r_1p)*r_2q+C_q \qquad (15141\text{-}1516)$$

And S which can be obtained from the result meets $S = (R*y^x)$ mod rN. In case S mod r $\neq$ 0 (1517), indicating that an error takes place during operation, the program branches to an error process (1520). For S mod N, the original operation result can be obtained as $y^x$ mod N (1518).

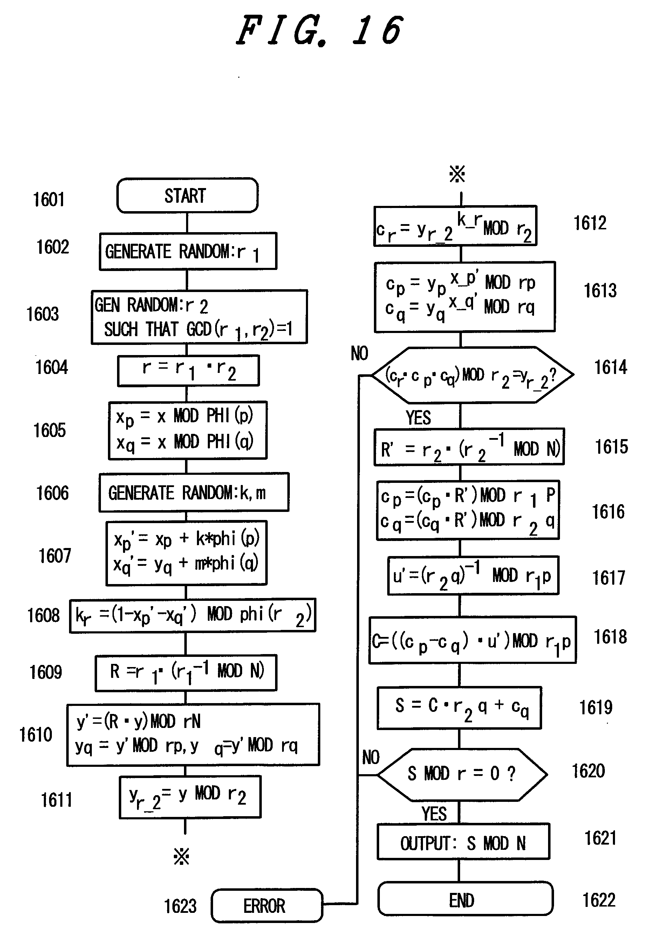

When the operation is continued in this manner by calculating, in respect of the operation results of Cp and Cq based on the modular exponentiation utilizing the addition chain, the remainders on the basis of mod $r_1p$ and mod $r_2p$ instead of mod p and mod q, errors can be detected over the whole of the modular exponentiation operation utilizing the CRT. Further, an example of process for calculating $y^x$ mod N is shown in Fig. 16. In the present embodiment, especially for the purpose of providing ability to withstand an attack which specifies secret keys from the relation of the operation values to the consumption current and operating time, the R is divided into two and an input value y to a modular exponentiation operation based on the addition chain is multiplied by one of the two (1609) to change the operation values randomly. Also, exponents xp and xq in the modular exponentiation operation are multiplied by random-number multiples of phi(p) and phi(q) to change the operation values at random every operation. Values of moduli in modular operations (1608, 1610, 1611, 1612, 1613, 161,1616, 1617, 1618 and 1620) are also changed at random. In the method of the present invention, the operation values are changed at random throughout the process to eliminate the correlation to the original operation values predictable from the consumption current, operation time and input value, thereby making it difficult for an attack utilizing the consumption current and operating time to proceed.

Remark:

(Error Detection Method for XOR Operation)

In an operation method for performing an exclusive or operation of values $a_0$ to $a_{n-1}$,

(1) Values $r_0$ to $r_{n-1}$ are generated arbitrarily such that the Hamming weight of exclusive or of all of the values $r_0$ to $r_{n-1}$, that is, the number of bits when the values are expressed in binary are maximized.
(2) Values

$$C_0 = a_0 \text{ EXOR } r_0, c_1 = a_1 \text{ EXOR } r_1, ..., C_{n-1} = a_{n-1} \text{ EXOR } r_{n-1}$$

are determined.

(3) Value

$$d = a_0 \text{ EXOR } a_1 \text{ EXOR } ... \text{ EXOR } a_{n-1}$$

and value

$$e = c_0 \text{ EXOR } c_1 \text{ EXOR } ... \text{ EXOR } c_{n-1}$$

are determined.

(4) If the Hamming weight of the operation result of d EXOR e is maximum, d is delivered but unless, an error process is carried out.

The information processing according to the present invention includes the above steps.

According to the present invention, error operations or fault operations in the information processing apparatus can be detected with, for example, small-scale hardware and small-scale overhead of operation time. Further, there is no correlation between the operation time or consumption current and the operation data, making acquisition of information by analyzers difficult or impossible.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. An information processing method of defining $f(s_0, s_1, ..., s_{n-1}, M)$ as a function for performing an operation $\bigcirc$ of values $s_0$ to $s_{n-1}$ modulo M, that is, $f(s_0, s_1, ...., s_{n-1}, M)=(s_0 \bigcirc S_1 \bigcirc ... \bigcirc a_{n-1})$ mod M and determining a value $c=f(a_0, a_1, ..., a_{n-1}, N)$, comprising the steps of:

   generating an arbitrary value r, said value r and value N being mutually prime;
   defining $g(s_0, s_1, M)$ as a function for performing a-n operation $\square$ of values $s_0$ and $s_1$ modulus M, that is, $g(s_0, s_1, M)=(s_0 \square s_1)$ mod M and generating values $R_0, ....., R_{n-1}$ which meet

   $$f(g(s_0, R_0, rN), g(s_1, R_1, rN), ..., g(s_{n-1}, R_{n-1}), rN), r) = 0$$

   and

   $$f(g(s_0, R_0, rN), g(s_1, R_1, rN), ..., g(s_{n-1}, R_{n-1}), rN), N) = c;$$

   determining values

   $$a_0' = g(a_0, R_0, rN), a_1' = g(a_1, R_1, rN), ..., a_{n-1}' = $$
   $$g(a_{n-1}, R_{n-1}, rN) ;$$

   determining

   $$c' = f(a_0', a_1', ..., a_{n-1}', rN) ) ;$$

   and
   performing a first process when $f(c',0,r)$ is 0 (zero) and a second process when not 0.

2. An information processing method according to claim 1, wherein the operation $\bigcirc$ is a modular addition or modular subtraction and the operation $\square$ is a modular multiplication.

**3.** An information processing method according to claim 2, wherein in respect of the number R which is mutually prime with N, $R_0=R_1=\cdots=R_{n-1}=R$ stands.

**4.** An information processing method according to claim 1, wherein the operation $\bigcirc$ and the operation $\square$ are modular multiplications.

**5.** An information processing method according to claim 4, wherein in respect of the R which is mutually prime with N, $f(R_0,R_1, ..., R_{n-1}, rN) = g(R, R^{-1} \bmod N, rN)$ stands.

**6.** An information processing method utilizing a modular exponentiation operation method for calculating $y^{x\_(n-1)} \bmod p_{n-1}$ from $y^{x\_0} \bmod p_0$, where x_0 is equivalent to $x_0$ and x^0 is equivalent to $x^0$, said method comprising the steps of:

generating an arbitrary value r, said value r and any one of values from $p_0$ to $p_{n-1}$ being mutually prime;
determining k which meets $x_0 + x_1 + ....+x_{n-1}+k \equiv 1(\bmod \ phi\ (r))$ modulo a value phi(r) of Euler function;
calculating $C_k = y^k \bmod r$, $C_{p\_0} = y^{x\_0} \bmod rp_0$, $C_{p-1} = y^{x\_1} \bmod rp1$, ..., and $C_{p\_(n-1)} = y^{x\_(n-1)} \bmod rp_{n-1}$ ; and performing a first process when

$$(C_k {*} C_{p\_0}{*} ... {*} C_{p\_(n-1)}) \bmod r = y \bmod r$$

stands and a second process when does not.

**7.** An information processing method for performing an operation using a Chinese remainder theorem in which in respect of a certain value x and values from $p_0$ to $p_{n-1}$ which are mutually prime, x mod N meeting $N=p_0{*}p_1{*}\cdots{*}p_{n-1}$ is determined from $C_{p\_0} = x \bmod p_0$, $C_{p\_1} = x \bmod p_1$, ..., $C_{p\_n-1} = x \bmod p_{n-1}$ , said method comprising the steps of:

generating an arbitrary value r which is mutually prime with any of the values $p_0$ to $p_{n-1}$ and which meets $r=r_0{*}r_1{*}...{*}r_{n-1}$ in respect of arbitrary values $r_0$ to $r_{n-1}$ which are mutually prime;
generating a certain value R meeting $R\equiv0(\bmod r)$ and $R\equiv1 (\bmod N)$;
determining $C_{p\_0}' = (C_{p\_0}{*}R) \bmod r_0p_0$, $C_{p\_1}' = (C_{p\_1}{*}R) \bmod r_1p_1$, ..., and $C_{p\_(n-1)}' = (C_{p\_(n-1)}{*}R) \bmod r_{n-1}p_{n-1}$
determining $S=(xR) \bmod rN$, said S meeting

$$S=C_{p\_0}(\Delta_0^{-1} \bmod p_0)\Delta_0 + C_{p\_1} (\Delta_1^{-1} \bmod p_1)\Delta_1 + ... +$$

$$C_{p\_(n-1)}(\Delta_{n-1}^{-1} \bmod p_{n-1})\Delta_{n-1},$$

where

$$\Delta_i = (r_0p_0{*}r_1p_1{*} ... {*}r_{n-1}p_{n-1})/r_ip_i ;$$

and
performing a first process when S mod r = 0 stands and a second process when does not.

**8.** An information processing method of performing a modular exponentiation operation for calculation of $y^x \bmod N$, where N is the product of values p and q which are mutually prime, comprising the steps of:

generating a certain value r which is mutually prime with value N and which meets $r=r_0{*}r_1$,
where the values $r_0$ and $r_1$ are arbitrary and mutually prime;
determining

$$X_p = x \bmod phi(p) \text{ and } x_q = x \bmod phi(q)$$

, where phi() represents Euler function;
determining $k_r = (1-x_p-x_q) \bmod phi(r_1)$ ;
determining $y_p = y \bmod rp$, $y_q = y \bmod rq$ and

$$y_{r\_1} = y \bmod r_1 \; ;$$

determining $C_r = y_{r\_1}{}^{k\_r} \bmod r_1$, $C_p = y_p{}^{x\_p} \bmod rp$ and $C_q = y_q{}^{x\_q} \bmod rq \; ;$
performing an error process if $(Cr*Cp*Cq) \bmod r_1 = Y_{r\_1}$ does not stand;
determining $R = r*(r^{-1} \bmod N) \; ;$
determining $C_p' = (C_p*R) \bmod r_0 p$ and $C_q' = (C_q*R) \bmod r_1 q \; ;$
determining $S=(((C_p'-C_q')*((r_1 q)^{-1} \bmod r_0 p))\bmod r_0 p)*r_1 q+C_q' \; ;$
performing an error process if $S \bmod r=0$ does not stand; and
delivering $S \bmod N$.

9. An information processing method according to claim 8 further comprising the following steps in advance of the fourth step:

determining $R=r_0*(r_0{}^{-1} \bmod N)$; and
multiplying $y$ by $R$ under a value $rN$ of modulus.

10. An information processing method according to claim 9, wherein in place of the second step, the following step is carried out:

determining

$$x_p = x \bmod \phi(p) + k*\phi(p)$$

and

$$xq = x \bmod \phi(q) + m*\phi(q)$$

in respect of arbitrary numbers $k$ and $m$.

11. An information processing apparatus for performing the method according to at least one of claims 1 to 10.

# FIG. 1

```
        101                          102
   ┌──────────────┐            ┌──────────────┐
   │  CENTRAL     │            │              │
   │  PROCESSING  │            │  COPROCESSOR │
   │  UNIT        │            │              │
   └──────┬───────┘            └──────┬───────┘
          │                           │
  ────────┴────────────┬─────────────┴──────────── 106
          103          │
   ┌──────────────┐    │   ┌──────────────────────────────┐
   │              │    │   │            MEMORY DEVICE      │
   │  I/O PORT    │    └───│   ┌──────────────────────┐    │
   │              │        │104│      PROGRAM         │    │
   └──────────────┘        │   └──────────────────────┘    │
                           │   ┌──────────────────────┐    │
                           │105│      DATA            │    │
                           │   └──────────────────────┘    │
                           └──────────────────────────────┘
```

# FIG. 4

RELATIVE PROCESSING TIME OF MODULAR EXPONENTIATION
REGARDING bit LENGTH    (1024bit OPERATION IS REFFERED TO 1)

# FIG. 2

201 — START

202 — GENERATE $r$

203 — GENERATE R SUCH THAT, R mod $r$ = 0 AND R mod $2^{32}$ = 1

204 — $I_1' = (I_1 * R)$ mod $r*2^{32}$
$I_2' = (I_2 * R)$ mod $r*2^{32}$

205 — $S = (I_1' + I_2')$ mod $r*2^{32}$

206 — S mod $r$ = 0? — NO → ERROR 209

YES

207 — OUTPUT S mod $2^{32}$

208 — END

# FIG. 3

301 — START

302 — GENERATE $r$

303 — GENERATE R SUCH THAT,
$R \bmod r = 0$ AND
$R \bmod 2^{32} = 1$

304 — GENERATE $R_1, R_2$ SUCH THAT,
$R_1 * R_2 = R \bmod r*2^{32}$

305 — $I_1' = (I_1 * R_1) \bmod r*2^{32}$
$I_2' = (I_2 * R_2) \bmod r*2^{32}$

306 — $S = (I_1' * I_2') \bmod r*2^{32}$

307 — $S \bmod r = 0$?

NO → ERROR — 310

YES

308 — OUTPUT $S \bmod 2^{32}$

309 — END

# FIG. 5

501 → START

502 → GENERATE r

503 → $x_p = x \bmod phi(p)$
$x_q = x \bmod phi(q)$

504 → $y_p = y \bmod rp$
$y_q = y \bmod rq$

505 → $C_p = y_p{}^{x\_p} \bmod rp$
$C_q = y_q{}^{x\_q} \bmod rq$

506 → $x' = (1 - x_p - x_q) \bmod phi(r)$

507 → $y_r = y \bmod r$

508 → $C_r = y_r{}^{x'} \bmod r$

509 → $(C_p * C_q * C_r) \bmod r = y_r$ ?  —NO→ ERROR  512

YES

510 → OUTPUT $C_p \bmod p$, $C_q \bmod q$

511 → END

# FIG. 6

**601** START

**602** GENERATE r

**603** GENERATE R SUCH THAT,
R mod r = 0 AND
R mod N = 1

**604** GENERATE $r_1$ $r_2$ SUCH THAT,
$r_1 * r_2 = r$ mod rN AND
$GCD(r_1, r_2) = 1$

**605** $C_{p'} = (C_p * R)$ mod $r_1 p$
$C_{q'} = (C_q * R)$ mod $r_2 p$

**606** $u = (r_2 q^{-1})$ mod $r_1 p$

**607** $S = (((C_{p'} - C_{q'}) * u)$ mod $r_1 p) * r_2 q + C_{q'}$

**608** S mod r = 0 ? — NO → ERROR **611**

YES

**609** OUTPUT S mod N

**610** END

## *FIG. 7*

701 INPUT A    INPUT B 702

703 ADDER
$C = A + B$

704 OUTPUT C

## *FIG. 9*

901 INPUT A    INPUT B 902

903 MULTIPLIER
$C = A * B$

904 OUTPUT C

# FIG. 8

801 INPUT A     INPUT B 802

803 ADD REDUNDANT INFORMATION FOR ERROR DETECTION

GENERATE D

804 MULTIPLIER A' = A * D

805 MULTIPLIER B' = B * D

806 ADDER C' = A' + B'

CHECK REDUNDANT INFORMATION AND REMOVE IT.

807 CALC. REMAINDER J = C' mod D

808 J = 0 ?     NO

YES

809 MULTIPLIER C = C' *1/D

810 OUTPUT C

811 OUTPUT ERROR SIGNAL

# FIG. 10

1001 INPUT A    INPUT B 1002

ADD REDUNDANT INFORMATION FOR ERROR DETECTION

1003 GENERATE D2

1004 GENERATE D1

1005 MULTIPLIER D = D1 * D2

1006 MULTIPLIER A' = A * D1

1007 MULTIPLIER B' = B * D2

1008 MULTIPLIER C' = A' * B'

CHECK REDUNDANT INFORMATION AND REMOVE IT.

1009 CALC. REMAINDER J = C' mod D

1010 J = 0 ?    NO

YES

1011 MULTIPLIER C = C' *1/D

1012 OUTPUT C    OUTPUT ERROR SIGNAL 1013

# FIG. 11

1101 INPUT $I_1$   1102 INPUT $I_2$   1103 INPUT $I_3$   1104 INPUT $I_4$   ... ... ...   1105 INPUT $I_n$

1106 ADD REDUNDANT INFORMATION FOR ERROR DETECTION

1107 OPERATION DEVICE

1108 OPERATION DEVICE

1109 OPERATION DEVICE

... ... ... ...

1110 OPERATION DEVICE

1111 CHECK REDUNDANT INFORMATION AND REMOVE IT.

1112 OUTPUT C

# FIG. 12

1201 — INPUT $I_1$

1202 — INPUT $I_2$

1203 — INPUT $I_3$

1204 — INPUT $I_4$  ... ... ...

1205 — INPUT $I_n$

1206
ADD REDUNDANT INFO.
OPERATION DEVICE WITH FAULT DETECTION
CHECK AND REMOVE

1207
ADD REDUNDANT INFO.
OPERATION DEVICE WITH FAULT DETECTION
CHECK AND REMOVE

1208
ADD REDUNDANT INFO.
OPERATION DEVICE WITH FAULT DETECTION
CHECK AND REMOVE

... ... ... ...

1209
ADD REDUNDANT INFO.
OPERATION DEVICE WITH FAULT DETECTION
CHECK AND REMOVE

1210 — OUTPUT C

# *FIG. 13*

1301    INPUT A        INPUT B    1302

1303      EXCLUSIVE OR
C = A EXOR B

1304      OUTPUT C

# FIG. 14

**1401** INPUT A    **1402** INPUT B

ADD REDUNDANT INFORMATION FOR ERROR DETECTION.

**1403** GENERATE D1    0xFFFF

**1404** EXCLUSIVE OR $D2 = D1\ EXOR\ 0xFFFF$

**1405** EXCLUSIVE OR $A' = A\ EXOR\ D1$

**1406** EXCLUSIVE OR $B' = B\ EXOR\ D2$

**1407** EXCLUSIVE OR $C' = A'\ EXOR\ B'$

**1408** EXCLUSIVE OR $C = A\ EXOR\ B$

CHECK REDUNDANT INFORMATION AND REMOVR IT.

**1409** EXCLUSIVE OR $J = C'\ EXOR\ C$

**1410** $J = 0xFFFF$ ?    YES    NO

**1411** OUTPUT C    **1412** OUTPUT ERROR SIGNAL

EP 1 338 955 A2

# FIG. 15

1501 START

1502 GENERATE RANDOM: $r_1$

1503 GEN RANDOM: $r_2$ SUCH THAT $GCD(r_1, r_2) = 1$

1504 $r = r_1 \cdot r_2$

1505 $x_p = x \bmod PHI(p)$
$x_q = x \bmod PHI(q)$

1506 $k_r = (1 - x_p - x_q) \bmod PHI(r)$

1507 $y_p = y \bmod rp, \; y_q = y \bmod rq$

1508 $y_r = y \bmod r$

1509 $c_r = y_r^{k\_r} \bmod r$

※

※

1510 $c_p = y_p^{x\_p} \bmod rp$
$c_q = y_q^{x\_q} \bmod rq$

1511 $(c_r \cdot c_p \cdot c_q) \bmod r = y_r?$ — NO

YES

1512 $R = r \cdot (r^{-1} \bmod N)$

1513 $c_p = (c_p \cdot R) \bmod r_1 P$
$c_q = (c_q \cdot R) \bmod r_2 q$

1514 $u' = (r_2 q)^{-1} \bmod r_1 p$

1515 $C = ((c_p - c_q) \cdot u') \bmod r_1 p$

1516 $S = C \cdot r_2 q + c_q$

1517 $S \bmod r = 0 ?$ — NO

YES

1518 OUTPUT: $S \bmod N$

1520 ERROR

1519 END

36

# FIG. 16

1601 START

1602 GENERATE RANDOM: $r_1$

1603 GEN RANDOM: $r_2$
SUCH THAT GCD $(r_1, r_2) = 1$

1604 $r = r_1 \cdot r_2$

1605 $x_p = x$ MOD PHI $(p)$
$x_q = x$ MOD PHI $(q)$

1606 GENERATE RANDOM: $k, m$

1607 $x_p{}' = x_p + k*phi(p)$
$x_q{}' = y_q + m*phi(q)$

1608 $k_r = (1 - x_p{}' - x_q{}')$ MOD $phi(r_2)$

1609 $R = r_1 \cdot (r_1^{-1}$ MOD N$)$

1610 $y' = (R \cdot y)$ MOD rN
$y_q = y'$ MOD rp, $y_q = y'$ MOD rq

1611 $y_{r\_2} = y$ MOD $r_2$

※

1623 ERROR

1612 $c_r = y_{r\_2}{}^{k\_r}$ MOD $r_2$

1613 $c_p = y_p{}^{x\_p'}$ MOD rp
$c_q = y_q{}^{x\_q'}$ MOD rq

1614 $(c_r \cdot c_p \cdot c_q)$ MOD $r_2 = y_{r\_2}$?  NO

YES

1615 $R' = r_2 \cdot (r_2^{-1}$ MOD N$)$

1616 $c_p = (c_p \cdot R')$ MOD $r_1$ P
$c_q = (c_q \cdot R')$ MOD $r_2$ q

1617 $u' = (r_2 q)^{-1}$ MOD $r_1 p$

1618 $C = ((c_p - c_q) \cdot u')$ MOD $r_1 p$

1619 $S = C \cdot r_2 q + c_q$

1620 S MOD r = 0 ?  NO

YES

1621 OUTPUT: S MOD N

1622 END

37